# EUROPEAN PATENT SPECIFICATION

(11) **EP 3 150 450 B1**
(45) Date of publication and mention of the grant of the patent: **21.03.2018**
(21) Application number: 16191757.0
(22) Date of filing: 30.09.2016
(51) Int. Cl.: B60T 13/26, B60T 13/66, B60T 13/68, B60T 8/32

(54) **VEHICLE BRAKING SYSTEM**
BREMSSYSTEM FÜR EIN FAHRZEUG
SYSTEME DE FREINAGE DE VEHICULE

(30) Priority: 01.10.2015 GB 201517354
(43) Date of publication of application: 05.04.2017
(73) Proprietor: Haldex Brake Products AB, 261 24 Landskrona (SE)
(72) Inventor: HARRISON, Dudley, Solihull B90 4 YP (GB)
(74) Representative: Johnson, Emma Elizabeth

(56) References cited:
- EP-A1- 2 757 010
- WO-A2-2009/098003
- DE-U1- 20 122 779
- GB-A- 2 490 925
- GB-A- 2 492 124

## Description

The present invention relates to a braking system, particularly, but not exclusively to a braking system for a trailer of a road vehicle comprising a tractor and trailer combination.

Large commercial trailers are typically fitted with two types of brake actuator-a service actuator in which air pressure on a piston or diaphragm pushes a rod which applies mechanical turning force to the input shaft of the brake, and a service/spring actuator which includes, in addition to a service actuator, a spring actuator comprising an internal coil spring which acts on the pushrod, which can be compressed when a second chamber is pressurised. The brakes can be applied therefore by either increasing pressure supplied to the service actuator as normal, and/or by a reducing the pressure supplied to the spring actuator. A common configuration, for example, is a semi-trailer with three axles, the front of which has service actuators and the middle and rear of which has service/spring actuators. Other combinations are possible, however.

In the normal driving condition the spring actuators are pressurised from the compressed air supply line (or trailer reservoir) to hold them off. Graduated braking in response to driving demand for braking is effected via the service actuators.

If the compressed air supply (or trailer reservoir) pressure falls, the pressure to the service actuators falls with it, reducing the applied force to the brake. At the same time, however, the pressure in the spring actuators is reducing by the same amount, which results in substantially the same braking force being maintained until and including when the supply line or reservoir is completely empty. Normally a park valve is also included in the supply line, which allows the pressure in the spring actuators to be exhausted in order to positively park the trailer.

It is also normal practice to include an emergency apply function to a trailer brake system. This acts when the pneumatic supply line ('red line') to the trailer is disconnected, exhausted or severed (thereby preventing the trailer reservoir from being replenished with compressed air). The emergency apply function acts on either the service actuators or the spring actuators, and can be required due to a fault when the vehicle is moving.

Usually a shunt valve is also included to divert air from the trailer reservoir to defeat the emergency apply function in order to allow the trailer to be moved ('shunted') without connection to a towing vehicle with a compressed air supply. This may be required, for instance, at a distribution depot or ferry terminal.

Emergency braking by the supply of pressurised fluid to the service actuators (i.e. via the service brake line) has an advantage in that this flow of fluid is normally controlled by the electronic braking system (EBS) or anti-lock braking system (ABS) of the trailer. The vehicle can either be immediately brought to a safe stop with the benefit of the anti-lock function, or the emergency brake application can be held off whilst the driver is warned of the situation. The driver may then bring the vehicle to a safe stop at the side of the road using normal service braking.

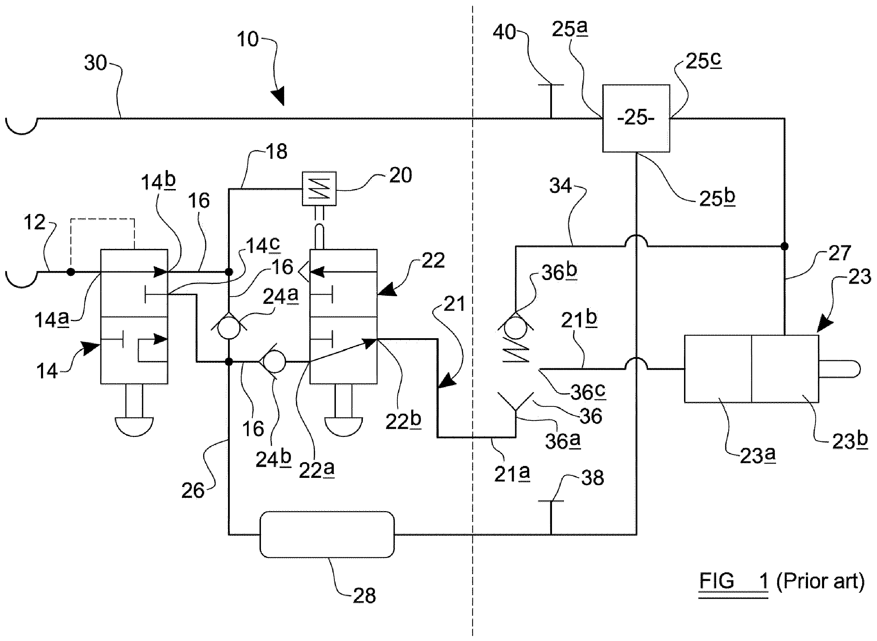

Emergency braking using the spring actuators, i.e. by the release of fluid from the spring line, can be less complex, and an example of such a prior art system is illustrated in Figure 1. This shows a braking system 10 for a trailer of a vehicle comprising a tractor and a trailer or semi-trailer. The braking system comprises a supply line 16 which is adapted to be connected, via a connector 12, to a source of pressurised fluid, typically compressed air, on a tractor to which the trailer is coupled. A connector line extends from the connector 12 to inlet 14a of a shunt valve 14, and the supply line 16 extends from the outlet 14b of the shunt valve 14 to an inlet 22a of a park valve 22. The outlet 22b of the park valve 22 is connected to the spring brake chamber 23a of a service / spring actuator 23 via a spring brake line 21 via an anti-compounding shuttle valve 36. The spring brake line 21 is divided into first 21a and second 21b portions by the anti-compounding shuttle valve 36, the first portion 21a extending from a spring side inlet 36a of the anti-compounding shuttle valve 36 to the park valve 22 and the second portion 21b extending from an outlet 36c of the anti-compounding shuttle valve 36 to the spring chamber 23a of the brake actuator 23.

Two one-way check valves 24a, 24b are provided in the supply line 16, both being oriented to allow flow of fluid from the shunt valve 14 to the brake valve 22 but to prevent flow of fluid in the other direction along the supply line 16, i.e. away from the park valve 22.

The park valve 22 is also provided with a pilot operated actuator 20 which is mechanically connected to the park valve 22, and also fluidly connected to the supply line 16 by means of a pilot line 18 which extends from the supply line 16 between the first check valve 24a and the outlet 14b of the shunt valve 14.

A trailer reservoir supply line 26 extends from the supply line 16 between the two check valves 24a, 24b to a pressurised fluid reservoir 28 mounted on the trailer. The trailer reservoir supply line 26 is connected to a second inlet 14c of the shunt valve 14.

There is also provided a control line 30 which is adapted to be coupled to a braking control line on a tractor to which the trailer is coupled, the braking control line 30 carrying a fluid pressure braking demand signal generated when a driver of the vehicle operates a brake pedal or the like to indicate a need for braking. The control line 30 is connected to a control input 25a of a conventional electrical braking system (EBS) control valve assembly 25. The EBS control valve assembly 25 typically comprises at least a modulator and is EBS control valve assembly 25 typically comprises at least a modulator and is connected to the service brake chamber 23b of the brake actuator 23. The modulator has a control port 25a which is connected to the control line 30 for receipt of a fluid pressure braking demand signal, a supply port 25b which is connected to a source of pressurised fluid, a delivery port 25c which is connected to the service brake chamber 23b via a service brake line 27, and an exhaust port which vents to a low pressure region, and is operable to move between a build configuration in which the supply port 25b is connected to the delivery port 25c whilst the exhaust port is closed, a hold configuration in which the exhaust port and the supply port 25b are closed and an exhaust configuration in which the delivery port 25c is connected to the exhaust port whilst the supply port 25b is closed. Various configurations of modulator are well known to those of skill in the art. The EBS control valve assembly 25 is operable to provide anti-lock braking control.

A cross-over line 34 extends from the service brake line 27 to a service side inlet 36b of the anti-compounding shuttle valve 36. The anti-compounding shuttle valve 36 has a valve member which is movable between a first position in which flow of fluid between the spring side inlet 36a and the outlet 36c is permitted whilst the service side inlet 36b is closed, and a second position in which flow of fluid between the service side inlet 36b and the outlet 36c is permitted whilst the spring side inlet 36a is closed. The anti-compounding shuttle valve 36 is also configured such that it adopts the first position if the fluid pressure in the spring brake line 21 is greater than the fluid pressure in the cross-over line 34, and adopts the second position if the fluid pressure in the cross-over line 34 exceeds the fluid pressure in the spring brake line 21. In this example, the double check valve is provided with a resilient biasing element or spring which biases the valve member to the first position. As such, the valve member will not move from the first position to the second position until the fluid pressure in the cross-over line 34 exceeds the fluid It should be appreciated, however, that the double check valve 36 need not be provided with a biasing element, and the valve member may move between the first and second positions when there is any pressure differential between the cross-over line 34 and the spring brake line 21.

The shunt valve 14 is movable between a first position (illustrated in Figure 1) in which the first inlet 14a is connected to the outlet 14b whilst the second inlet 14c is closed, and a second position in which the first inlet 14a is closed and the second inlet 14c is connected to the outlet 14b. In this example, the shunt valve 14 is adapted to be moved manually between the first and second positions.

The park valve 22 is movable between a first position (illustrated in Figure 1) in which the inlet 22a is connected to the outlet 22b and a second position in which the inlet 22a is closed and the outlet 22b vents to a low pressure region (typically to atmosphere). In this example, the park valve 22 is movable manually between the first and second positions. The pilot operated actuator 20 is also configured to move the park valve 22 from its first position to its second position on the release of pressurised fluid from the pilot control line 18. Once this has occurred, the park valve 22 must be moved manually to return it to its first position, but the pilot operated actuator 20 is configured to allow this only when the pilot control line 18 is pressurised.

The system is provided with two pressure sensors (transducers)-a reservoir transducer 38 which measures the pressure in the line connecting the trailer reservoir 28 to the supply inlet 25b of the EBS control valve assembly 25, and a control pressure transducer 40 which measures the pressure in the control line 30. The output from the reservoir transducer 38 can be used to alert an operator if the fluid pressure in the trailer reservoir 28 is running low.

The braking system 10 is operated as follows.

When the trailer is coupled to a tractor, and is set up for normal service braking, the braking system is configured as shown in Figure 1. The shunt valve 14 is placed manually in its first position. The supply line 16 is connected via the connector 12 to a source of pressurised fluid on the tractor, and pressurised fluid passes to the pilot operated actuator 20 via the pilot line 18. The pilot operated actuator 20 thus allows the park valve 22 to be moved manually to its first position whereby its inlet 22a is connected to the outlet 22b. As a result, pressurised fluid passes from the connector 12 along the supply line 16 via the shunt valve 14, through the park valve 22, along the first portion 21a of the spring brake line 21, and to the spring side inlet 36a of the anti-compounding valve 36. In the absence of driver demand for braking, this pushes the anti-compounding shuttle valve 36 to its first position, which allows flow of pressurised fluid from the spring brake line 21 into the spring brake chamber 23a of the brake actuator 23. The fluid pressure in the spring brake chamber 23a overcomes the biasing force of the spring and the actuator acts to release the brake.

Pressurised fluid also passes from the tractor to the trailer reservoir 28 via the trailer reservoir supply line 26 so that the trailer reservoir 28 is charged with pressurised fluid.

When a driver of the vehicle generates a fluid pressure braking demand signal, this passes along the braking control line 30 to the EBS valve assembly 25, resulting in the supply of fluid pressure to the service braking chamber 23b of the brake actuator 23, and the gradual application of brake pressure in line with driver demand for braking. A conventional anti-lock function may be provided by means of modulating valves in the EBS valve assembly 25.

The anti-compounding shuttle valve 36 ensures that whilst the braking demand pressure is less than the supply reservoir pressure or greater than the supply reservoir pressure by an amount which is not sufficient to overcome the biasing force of the biasing element in the anti-compounding shuttle valve 36, there is no flow of fluid from the service braking line 27 to the spring brake line 21. If, on the other hand, there is driver demand for braking, when the spring brake chamber 23a is exhausted (and so the spring brake applied), the fluid pressure in the cross-over line 34 pushes the anti-compounding valve to its second position and there is flow of pressurised fluid from the service side inlet 36b to the spring brake chamber 23a (to release the spring brake) in addition to flow to the service braking chamber 23b. Thus, damage to the brake or brake actuator due to the simultaneous application of the spring brake and the service brake (compounding of the brakes) is avoided.

If the vehicle is parked, the spring brake can be applied by manually moving the park valve 22 from its first position to its second position. This causes fluid pressure in the spring brake line 21 to be vented to atmosphere at the park valve 22. Pressure is therefore released from the spring brake chamber 23a of the brake actuator 23 at the park valve 22 and the actuator 23 moves in response to the spring force to apply the brake.

If the connector 12 of the supply line 16 is disconnected from its supply of pressurised fluid (either because of a failure in the connection of the supply line to the tractor or because the tractor is uncoupled from the trailer), the resultant release of pressure from the pilot line 18 causes the pilot operated actuator 20 to move the park valve 22 to its second position in which the fluid pressure in the spring brake line 21 is exhausted to atmosphere. Fluid pressure is therefore released from the spring brake chamber 23a of the brake actuator 23 and vented to atmosphere at the park valve 22, and the actuator 23 moves in response to the spring force to apply the brake.

The shunt valve 14 may be operated to release the parking brake without the need for electrical power, for example if the trailer is disconnected from a tractor but needs to be moved around a depot or the like. This can be done by moving the park valve 22 to its first position, and moving the shunt valve 14 to its second position. Pressurised fluid flows from the trailer reservoir 28, along the supply line 16 and pilot line 18, thus causing the pilot operated actuator 20 to allow the park valve 22 to be returned manually to its first position. Pressurised fluid from the trailer reservoir 28 can than pass through the park valve 22 into the spring brake line 21 and to the spring brake chamber 23a of the brake actuator 23, thus releasing the spring brake. The spring brake can be reapplied by returning the shunt valve 14 to its first position.

It will be appreciated, however, that this system does not allow for any anti-lock braking function during the emergency braking. Various solutions to this problem are presented in DE3522183C1 and GB2492124. In the systems proposed in these documents an electrically operated valve is provided to control the release of pressurised fluid from the spring brake.

GB2492124 shows a braking system which provides for emergency braking using the spring brake, and which includes an electrically operable emergency braking override valve which is operable to suppress the automatic application of the spring brake in the event of a loss of pressure in the compressed air supply to the trailer. This system includes a pilot operated emergency brake apply valve which has a control port which is connected to the compressed air supply line, the emergency brake apply valve being configured automatically to connect the spring brake chamber to a low pressure region when the pressure at the control port falls below a predetermined level. The electrically operable emergency braking override valve has a first port which is connected to the supply line and a second port which is connected to the control port of the emergency brake apply valve and, when supplied with sufficient electrical power, acts to prevent loss of fluid pressure at the control port of the emergency brake apply valve.

In an alternative proposal, disclosed in EP1538054, the braking system is provided with a means for preventing the emergency application of the spring brake in the event of loss of pressure in the spring brake circuit, and the service braking circuit downstream of the or each modulator associated with brake actuators on one side of the vehicle is connected to the spring brake line via a shuttle valve. The shuttle valve is configured such that pressurised fluid is supplied to the spring brake line from this portion of the service braking circuit when the fluid pressure in the spring brake line is lower than the pressure in the service brake circuit. Thus fluid from one half of the service braking circuit is used to prevent the application of the spring brake. The service braking circuit may then be used to apply the brakes to bring the vehicle to a halt. The ABS is disabled on the one side of the vehicle, however, to avoid chattering of the spring brake during an ABS intervention, but can be operated as normal on the other side of the vehicle.

A yet further alternative solution is illustrated in GB2490925. This document discloses a trailer braking system in which a signal from a brake apply solenoid is used to override the emergency application of the spring brake. The brake apply solenoid is provided in the control line to the service braking system, and is electrically operable to connect the service brakes to a local source of pressurised fluid in order to apply the trailer brakes in the absence of a driver generated braking demand signal. The system also includes a shuttle valve with a first inlet which is connected to the emergency brake apply valve and a second inlet which is connected to the brake apply valve, and an outlet which is connected to the spring brake. The shuttle valve either the first inlet or the second inlet to the outlet-whichever carries the highest pressure, so pressure from the brake apply valve only acts on the spring brakes when pressure in the spring brake circuit is lost. It is possible that there is insufficient flow through the brake apply valve to effect a timely re-pressurisation of the spring brakes, and so this system can also include a pressure sensor which detects the emergency condition (falling supply line pressure) in an effort to apply the override before significant pressure is lost in the spring brakes.

According to a first aspect of the invention we provide a vehicle braking system comprising a supply line which is adapted to be connected to a supply of pressurised fluid, a pressurised fluid reservoir, a parking brake actuator assembly including a brake actuator having a spring brake chamber which is operable such that the supply of pressurised fluid to the spring brake chamber causes the brake actuator to move to a brake release position and the release of pressurised fluid from the spring brake chamber causes the brake actuator to move a brake apply position, a pilot operated emergency brake apply valve with an inlet which is connected to the pressurised fluid reservoir, an outlet which is connected to the spring brake chamber by a spring brake line, and a control inlet connected to an emergency braking control line, the emergency brake apply valve being movable in accordance with the pressure at its control inlet between a first position in which its inlet is connected to its outlet and a second position in which its inlet is closed and its outlet vents to a low pressure region, there being a pressure sensor provided in the emergency braking control line, characterised in that when the supply line is pressurised, the pressure sensor is directly connected to the pressurised fluid reservoir.

Advantageously, the pressure sensor is not connected to the pressurised fluid reservoir when the supply line is depressurised.

In one embodiment, the vehicle braking system further includes a park valve assembly which is movable between a first configuration in which the emergency braking control line is connected to the pressurised fluid reservoir and a second configuration in which the emergency braking control line is vented to a low pressure region.

Advantageously, the park valve assembly adopts the first configuration in which the emergency braking control line is connected to the pressurised fluid reservoir when the supply line is pressurised, and automatically moves to the second configuration in which the emergency braking control line is vented to a low pressure region when the supply line is depressurised.

The park valve assembly may include a park valve which has an inlet and an outlet, the inlet being connected to the supply line via a park line, and the outlet being connected to the emergency braking control line, the park valve being movable between a first position in which the inlet is connected to the outlet, and a second position in which the inlet is closed and the outlet vents to a low pressure region. In this case, the park valve is preferably manually movable between the first position and second position.

The park valve may be pilot operated and include an actuator with a control inlet which is connected to the park line via a pilot control line, the park valve being movable between its first position and second position according to the fluid pressure at the control inlet.

The park valve may include a biasing element which urges the park valve from its first position into its second position, the actuator moving the park valve from its second position to its first position on the supply of pressurised fluid to its control inlet.

The supply line may be connected to the pressurised fluid reservoir.

The braking system may further include a non-return valve in the supply line which is operable to permit flow of fluid along the supply line towards the inlet of the park valve whilst substantially preventing flow of fluid along the supply line in the opposite direction.

The non-return valve may be located between the inlet of the park valve and the connection between the supply line and the pilot control line.

Alternatively, the park valve assembly may be provided with a pilot operated auxiliary valve having a first inlet which is connected to the outlet of the park valve, a second inlet which is connected to the pressurised fluid reservoir, an outlet which is connected to the emergency braking control line, and a control inlet which is connected to the outlet of the park valve, the auxiliary valve being movable in accordance with the fluid pressure at its control inlet between a first position in which the second inlet is connected its outlet and a second position in which the first inlet is connected to its outlet. In this case, the auxiliary valve may include a resilient biasing element which urges the auxiliary valve into its second position, supply of pressurised fluid to the control inlet of the auxiliary valve moving it to its first position.

The braking system may include a non-return valve mounted in a line between the supply line and the pressurised fluid reservoir, the non-return valve being operable to permit flow of fluid from the supply line to the pressurised fluid reservoir whilst substantially preventing flow of fluid in the opposite direction.

The second inlet of the auxiliary valve may be connected to the line between the supply line and the pressurised fluid reservoir, and the non-return valve being located between the supply line and the connection to the second inlet of the auxiliary valve.

The emergency brake apply valve may further include a biasing element which urges the emergency brake apply valve into its second position, and an actuator which is connected to the control inlet of the emergency brake apply valve and which operates such that supply of pressurised fluid to the control inlet of the emergency brake apply valve causes the emergency brake apply valve to move against the force of the biasing element to its first position, the biasing element acting to return the emergency brake apply valve to its second position on release of pressurised fluid from its control inlet.

The braking system may further include an anti-compounding double check valve which is located in the spring brake line between the outlet of the emergency brake apply valve and the spring brake chamber.

A non-return valve may be provided in the line between the inlet of the emergency brake apply valve and the pressurised fluid reservoir, the said non-return valve being arranged such that flow of fluid from the pressurised fluid reservoir to the inlet of the emergency brake apply valve is permitted whilst flow of fluid in the opposition direction, from the inlet of the emergency brake apply valve to the reservoir is substantially prevented.

The vehicle braking system may further include a manually operable shunt valve which is movable between a first position in which the supply line is connected to a connector suitable for connection to an external source of pressurised fluid, and a second position in which the supply line is connected to a further pressurised fluid reservoir. The further pressurised fluid reservoir may be the pressurised fluid reservoir to which the inlet of the pilot operated emergency brake apply valve is connected.

The pressure sensor is directly connected to the pressurised fluid reservoir when the supply line is pressurised and the shunt valve is in its first position or when the shunt valve is in its second position. In other words, the connection of the pressure sensor to the pressurised fluid reservoir is unaffected by the position of the shunt valve.

The shunt valve may have a first inlet which is connected to the connector, a second inlet which is connected to the pressurised fluid reservoir, and an outlet which is connected to the supply line, the shunt valve being movable between a first position in which the first inlet is connected to the outlet whilst the second inlet is closed, and a second position in which the second inlet is connected to the outlet whilst the first inlet is closed.

The braking system may further include a supply connector by means of which the supply line may be connected to an external supply of pressurised fluid.

According to a second aspect of the invention we provide a trailer comprising a braking system according to the invention, the braking system further including a supply connector by means of which the supply line may be connected to an external supply of pressurised fluid.

An embodiment of the invention will now be described, by way of example only, with reference to the accompanying drawing:
FIGURE 2 shows a schematic illustration of a vehicle braking system according to the invention in the normal configuration,
FIGURE 3 shows a schematic illustration of a vehicle braking system according to the invention in the emergency braking configuration,
FIGURE 4 shows a schematic illustration of a first alternative embodiment of vehicle braking system according to the invention,
FIGURE 5 shows a schematic illustration of a second alternative embodiment of vehicle braking system according to the invention,
FIGURE 6 shows an schematic illustration of a third alternative embodiment of vehicle braking system according to the invention,
FIGURE 7 shows a schematic illustration of a fourth alternative embodiment of vehicle braking system according to the invention.

Referring now to the figures, there is shown a vehicle braking system, in particular a trailer braking system 10' which includes a supply line 16' with a connector 12', a shunt valve 14', a pilot line 18', a pilot operated actuator 20', a park valve 22', a brake actuator 23', first and second non-return valves 24a', 24b', an EBS control valve assembly 25', a service line 27', a control line 30', a trailer reservoir 28', and an anti-compounding shuttle valve 36, and a control pressure transducer 40, which are configured and operate identically to the corresponding parts in the prior art braking system described above in relation to Figure 1. To avoid repetition, only the differences between the inventive system and the prior art system illustrated in Figure 1 will be described in detail below.

The inventive braking system 10' also includes a pilot operated emergency braking apply valve 42 which has an inlet 42a which is connected to the line between the trailer reservoir 28' and the supply inlet 25b' of the EBS valve assembly 25' (the EBS supply line), and an outlet 42b which is connected to spring side inlet 36a' of the anti-compounding valve 36' via the first portion 21a' of the spring brake line 21'. It also has a fluid pressure operated actuator with a control inlet 42c which is connected to the outlet 22b' of the park valve 22' via an emergency braking control line 44. The emergency brake apply valve 42 is movable between a first position in which its inlet 42a is connected to its outlet 42b, and a second position in which its inlet 42a is closed, and its outlet 42b vents to a low pressure region. A resilient biasing means (e.g. a spring) is provided to urge the emergency brake apply valve 42 to its second position, whilst the supply of pressurised fluid to the control inlet 42c moves the valve 42 against the biasing force of the spring into its first position.

The reservoir pressure transducer 38' is no longer positioned in the EBS supply line, but is, instead, located in the emergency braking control line 44.

The second non-return valve 24b' is, in the inventive system, located in the line between the inlet 42a of the emergency brake apply valve 42 and the EBS supply line. As such, in the inventive system, there is no non-return valve in the supply line 16 between the inlet 22a' of the park valve 22' and the connection between the supply line 16 and the trailer reservoir supply line 26'. The second non-return valve 24b' is operable to substantially prevent flow of fluid from the inlet 42a of the emergency brake apply valve 42 to the EBS supply line, whilst allowing flow of fluid from the EBS supply line to the emergency brake apply valve 42.

The inventive system is operated as follows.

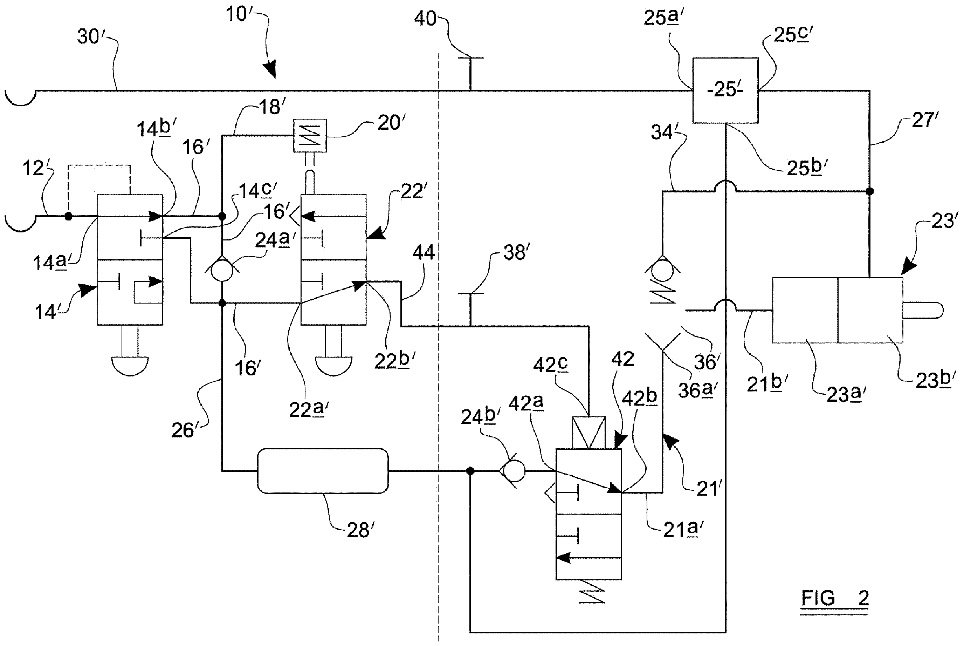

When the trailer is coupled to a tractor, and the braking system is set up for normal service braking, the braking system is configured as shown in Figure 2.

The shunt valve 14' is placed manually in its first position. The supply line 16' is connected to a source of pressurised fluid on the tractor via the connector 12', and pressurised fluid passes to the pilot operated actuator 20' via the pilot line 18'. The pilot operated actuator 20' thus allows the park valve 22' to be moved to its first position whereby its inlet 22a' is connected to the outlet 22b'. As a result, pressurised fluid passes from the connector 12' along the supply line 16' via the shunt valve 14', through the park valve 22' to the emergency braking control line 44 to the control port 42c of the emergency apply valve 42. This moves the emergency brake apply valve 42 to its first position in which its inlet 42a is connected to its outlet 42b. Pressurised fluid can thus flow along the first portion 21a' of the spring brake line 21', to the spring side inlet 36a' of the anti-compounding valve 36'. In the absence of driver demand for braking, this pushes the anti-compounding shuttle valve 36' to its first position, which allows flow of pressurised fluid from the spring brake line 21' into the spring brake chamber 32a' of the brake actuator 32b'. The fluid pressure in the spring brake chamber 32a' overcomes the biasing force of the spring and the actuator acts to release the brake.

Pressurised fluid also passes from the tractor to the trailer reservoir 28' via the trailer reservoir supply line 26' so that the trailer reservoir 28' is charged with pressurised fluid.

When a driver of the vehicle generates a fluid pressure braking demand signal, this passes along the braking control line 30' to the EBS valve assembly 25', resulting in the supply of fluid pressure to the service braking chamber 23b' of the brake actuator 23', and the gradual application of brake pressure in line with driver demand for braking. A conventional anti-lock function may be provided by means of modulating valves in the EBS valve assembly 25'.

The anti-compounding shuttle valve 36' ensures that whilst the braking demand pressure is less than the supply reservoir pressure or greater than the supply reservoir pressure by an amount which is not sufficient to overcome the biasing force of the biasing element in the anti-compounding shuttle valve 36', there is no flow of fluid from the service braking line 27' to the spring brake line 21'. If, on the other hand, there is driver demand for braking, when the spring brake chamber 23a' is exhausted (and so the spring brake applied), the fluid pressure in the cross-over line 34' pushes the anti-compounding valve to its second position and there is flow of pressurised fluid from the service side inlet 36b' to the spring brake chamber 23a' (to release the spring brake) in addition to flow to the service braking chamber 23b'. Thus, damage to the brake or brake actuator due to the simultaneous application of the spring brake and the service brake (compounding of the brakes) is avoided.

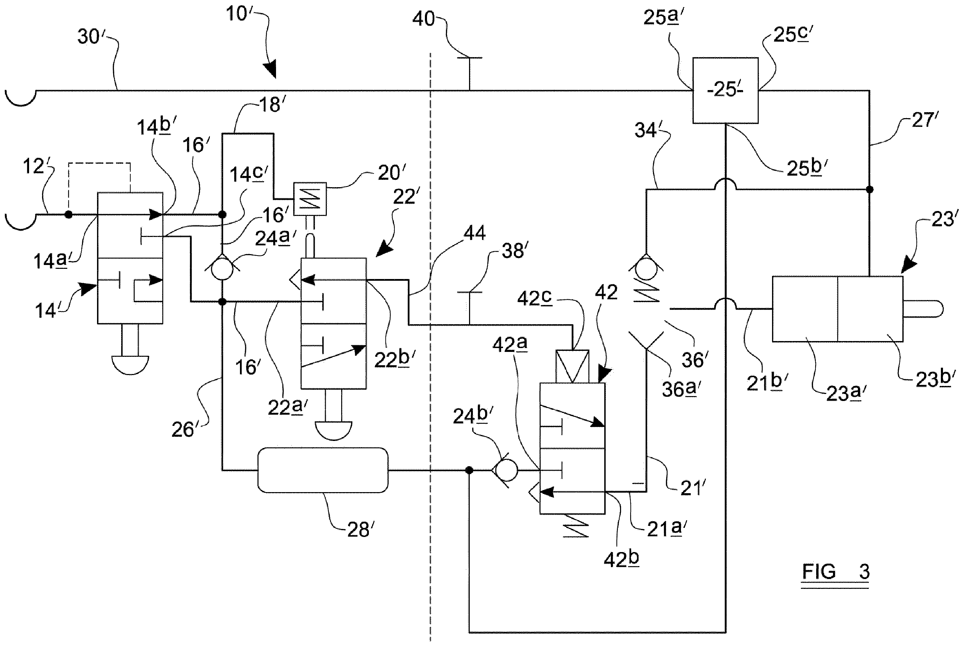

If the vehicle is parked, the spring brake can be applied by manually moving the park valve 22' from its first position to its second position. This causes fluid pressure in the emergency braking control line 44 to be vented to atmosphere at the park valve 22'. As a result of the loss of pressure at the control inlet 42c of the emergency brake apply valve 42, this valve 42 moves to its second position in which its inlet 42a is closed whilst its outlet 42b (and hence the spring brake line 21) vents to atmosphere at the emergency brake apply valve 42. Pressure is therefore released from the spring brake chamber 23a' of the brake actuator 23' at the park valve 22' and the actuator 23' moves in response to the spring force to apply the brake. This is illustrated in Figure 3.

If the connector 12' of the supply line 16' is disconnected from its supply of pressurised fluid (either because of a failure in the connection of the supply line to the tractor or because the tractor is deliberately uncoupled from the trailer), the release of pressure from the pilot line 18' causes the pilot operated actuator 20' to move the park valve 22' to its second position in which the fluid pressure in the spring brake chamber 23a is exhausted to atmosphere as described above in relation to the manual movement of the park valve 22' to its second position.

The shunt valve 14' may be operated to release the parking brake without the need for electrical power, for example if the trailer is disconnected from a tractor but needs to be moved around a depot or the like. This can be done by moving the park valve 22' to its first position, and moving the shunt valve 14' to its second position. Pressurised fluid flows from the trailer reservoir 28', along the supply line 16' and pilot line 18', thus causing the pilot operated actuator 20' to allow the park valve 22' to be moved to its first position. Pressurised fluid from the trailer reservoir 28' can than pass through the park valve 22'along the emergency braking control line 44 to the control inlet 42c of the emergency brake apply valve 42. This causes the emergency brake apply valve 42 to move to its first position, and to connect the spring brake line 21' to the trailer reservoir 28'. Pressurised fluid is thus supplied to the spring brake chamber 23a' of the brake actuator 23', thus releasing the spring brake. The spring brake can be reapplied by returning the shunt valve 14 to its first position.

The pressure transducer 38' measures the pressure in the emergency braking control line 44, and can therefore detect a loss of pressure in this line 44' resulting from movement of the park valve 22' from its first position to its second position (either as a result of manual movement of the park valve 22' or as a result of loss of pressure in the supply line 16'), thereby anticipating the emergency application of the spring brake by virtue of movement of the emergency braking control valve 42 from its first position to its second position. This can be used to warn a driver of the vehicle of the emergency braking. Moreover, removing the second non-return valve 24b' from the supply line 16' means that, when the park valve 22' is in its first position, emergency braking control line 44 is connected directly to the trailer reservoir 28' via the reservoir supply line 26'. As such the control pressure transducer 38' can also be used to determine the fluid pressure in the trailer reservoir 28', thus eliminating the need for a separate reservoir transducer.

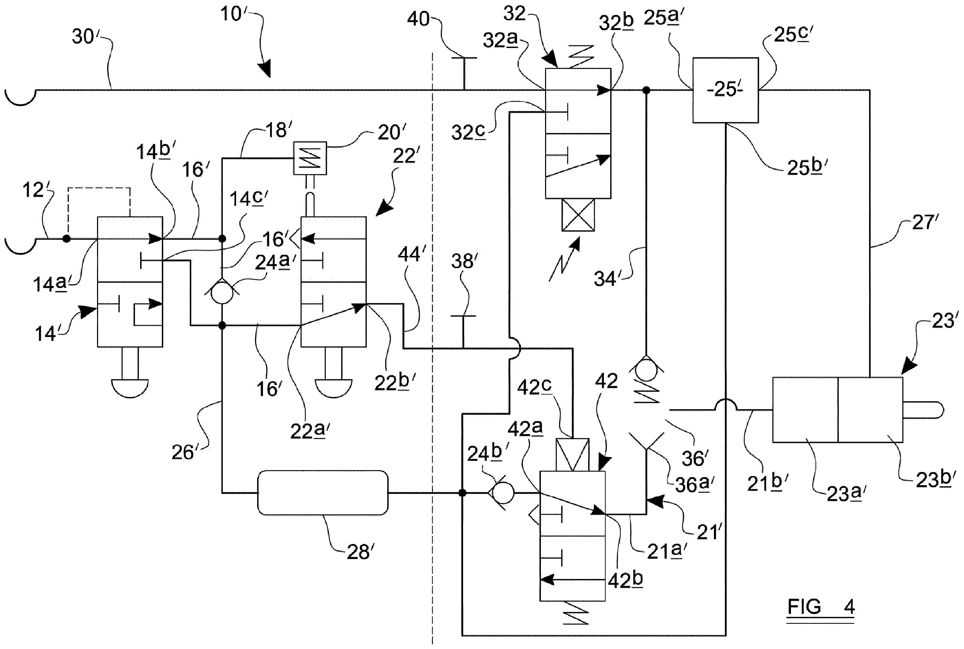

It should be appreciated that the inventive braking system 10' could be incorporated into the braking system disclosed in our co-pending application GB2490925 and as illustrated in Figure 4. In this case, the unit 25'is an ABS braking control valve assembly. The brake apply valve 32 has a first inlet 32a which is connected to the control line 30', a second inlet 32c which is connected to the reservoir 28', and an outlet 32b which is connected to the control inlet 25a' of the ABS control valve assembly 25'. The cross-over line 34' extends from the line between the outlet 32b of the brake apply valve 32 and the control inlet 25a' of the ABS control valve assembly 25'. The brake apply valve 32 is movable between a first position (illustrated in Figure 4) in which the first inlet 32a is connected to the outlet 32b, whilst the second inlet 32c is closed, and a second position in which the first inlet 32a is closed and the third inlet 32c is connected to the outlet 32b. The brake apply valve 32 is electrically operable, in this example, by means of a solenoid. Mechanical biasing means (in this example a spring) is provided to urge the brake apply valve 32 into the first position. Movement of the brake apply valve 32 from the first position to the second position is achieved by the supply of an electrical current to the solenoid 32d.

The brake apply valve 32 may be operated as described in GB2490925 to apply the service brakes in the absence of driver demand for braking.

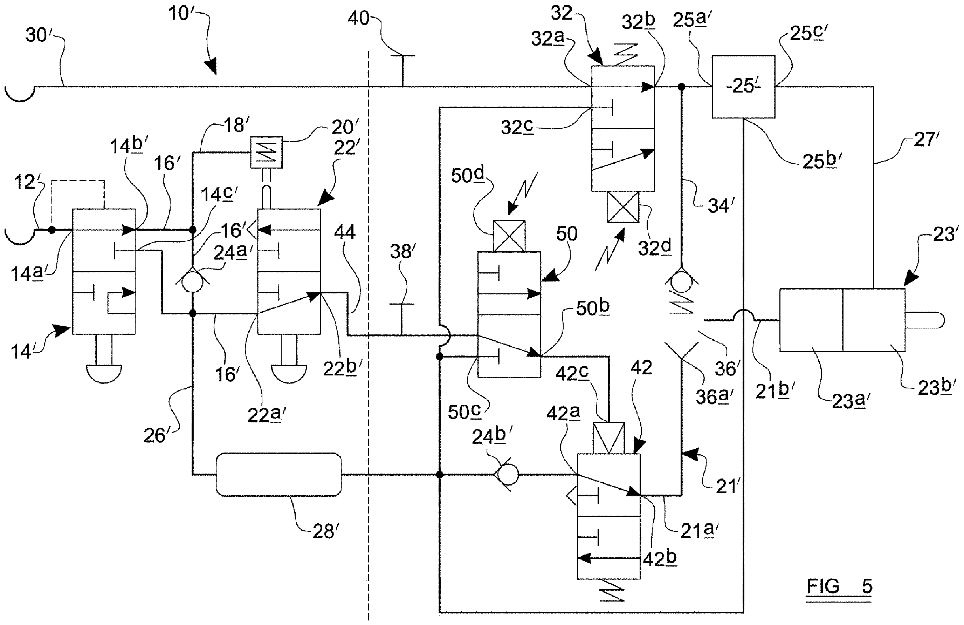

The invention may also be incorporated into the braking system described in our co-pending patent application GB 2492124, as illustrated in Figure 5. In this case, the braking system is also provided with a brake apply valve 32 as described above in relation to Figure 4, and an electrically operable emergency braking override valve 50 located in the emergency braking control line 44 between the control inlet 42c of the emergency brake apply valve 42 and the pressure transducer 38'. The emergency braking override valve 50 has a first port 50a which is connected to the outlet 22b' of the park valve 22' via the pressure transducer 38', an outlet 50b which is connected to the control inlet 42c of the emergency brake apply valve 42, a second inlet 50c which is connected to the pressurised fluid reservoir 28', and a solenoid operated actuator 50d. The emergency braking override valve 50 is movable between a first position (illustrated in Figure 5) in which its first inlet 50a is connected to its outlet 50b, whilst its second inlet 50c is closed, and a second position in which its second inlet 50c is connected to its outlet 50b whilst its first inlet 50a is closed. The passage of fluid from the supply line to the control inlet 42c of the emergency apply valve 42 via the park valve 22' is therefore not affected by the emergency braking override valve 50 when the emergency braking override valve 50 is in its first portion. The emergency braking override valve 50 is electrically operable, in this example, by means of a solenoid 50d. Mechanical biasing means (in this example a spring) is provided to urge the emergency braking override valve 50 into its first position. Movement of the emergency braking override valve 50 from the first position to the second position is achieved by the supply of an electrical current to the solenoid 50d.

The emergency braking override valve 50 may be used as described in GB2492124 if it is not be desirable to allow emergency application of the vehicle spring brakes to take place. If there is no problem with the electrical power supply to the system 10', the emergency braking override valve 50 can be operated to prevent the emergency application of the brakes, specifically by the supply of electrical power to the solenoid 50d. This causes the emergency braking override valve 50 to move to its second position wherein the control inlet 42c of the emergency brake apply valve 42 is connected to the reservoir 28'. Pressurised fluid thus flows from the reservoir 28' to the control inlet 42c of the emergency brake apply valve 42, maintained it in or returning it to its first position. Pressurised fluid can then also flow from the reservoir 28' to the spring brake chamber 23a' via the emergency apply valve 42, to release the spring brake.

Emergency braking can then, if desired, be effected using the service brake by the supply of electrical power to the solenoid 32d of the brake apply valve 32. Just as described above in relation to Figure 4, this causes the brake apply valve 32 to move to its second position in which the first inlet 32a is closed and the second inlet 32c is connected to its outlet 32b. Pressurised fluid thus passes from the reservoir 28' to the EBS control valve assembly 25' via the brake apply valve 32 and on to the service braking chamber 23b' of the brake actuator 23' via the service brake line 27' to effect service braking. As with conventional service braking, the EBS valve assembly can use conventional ABS control algorithms to modify the emergency braking in accordance with standard anti-lock control procedures if wheel slip is detected.

If the pressure transducer 38' is connected to an electronic control unit (ECU not shown) which controls operation of the electrically operated valves in the braking system (including the brake apply valve 32 and the electrically operated valves in the EBS control valve assembly 25'), the ECU can be programmed always to energise the emergency override valve 50 to override the emergency application of the spring brake whenever a sudden drop in the pressure in the emergency braking control line 44 is detected, or whenever the pressure in this line 44 falls below a predetermined level. The ECU may alternatively be programmed to energise the emergency braking override valve 50 to override the emergency application of the spring brake when a sudden drop in the pressure in the emergency braking control line 44 is detected, or when the pressure in this line 44 falls below a predetermined level, but only if certain other predetermined criteria are met- if the vehicle speed exceeds a predetermined level, or if the fluid pressure in the trailer reservoir 28'exceeds a predetermined level, for example.

Whilst the ECU may also be programmed always to activate the brake apply valve 32 when the emergency braking override valve 50 is activated (i.e. to effect emergency service braking when the emergency application of the spring brake is prevented) this need not be the case. The ECU may be programmed to activate a signal warning a driver of the vehicle that the supply of pressurised fluid to the supply line has been broken via a CAN bus connection to the driver's cab. The signal may be visual-a warning light or the like, or audible-a buzzer, bell or the like, or preferably both. The driver may then make a decision to activate the brakes himself, in which case, an electrical braking demand signal is transmitted directly to the brake valve assembly 25' via a CAN bus to effect service braking.

The ECU may further be programmed such that, once the vehicle has come to a halt, it operates the EBS control valve assembly 25' to hold the pressure in the service brake chamber 23b' of the brake actuator 23', whilst the emergency braking override valve 50 is deenergised. This causes the control inlet 42c of the emergency brake apply valve 42 to be vented to atmosphere, allowing the emergency apply valve 42 to move to its second position, and venting the spring brake line 21' and spring brake chamber 23a'. Once the pressure in the spring brake chamber 23a' is exhausted, the spring brake is applied, and the EBS control valve assembly 25' may be operated to exhaust the service brake chamber 23b'.

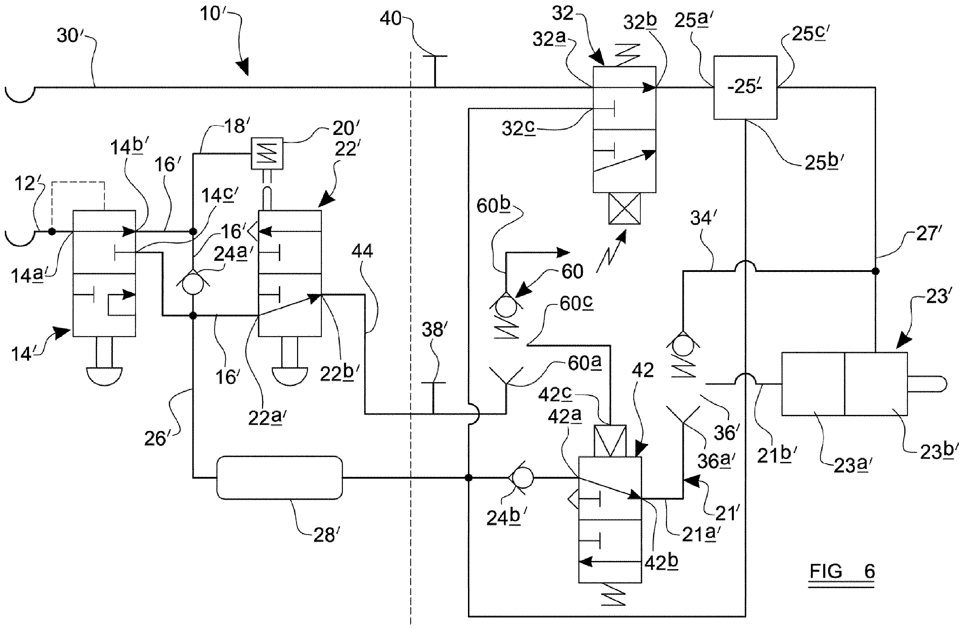

The invention may also be incorporated into the braking system described in our co-pending application GB1511974.6 as illustrated in Figure 6. In this case, the braking system is also provided with a brake apply valve 32 as described above in relation to Figures 4 and 5, but instead of an emergency braking override valve 50, a double check valve-hereinafter referred to as the override shuttle valve 60 is located in the emergency braking control line 44' between the control inlet 42c of the emergency brake apply valve 42 and the pressure transducer 38'. The override shuttle valve 60 which has a brake-side inlet 60a, which is connected to the outlet 22b' of the park valve 22' via the pressure transducer 38', and a suspension-side inlet 60b, which is connected to an alternative source of pressurised fluid such as a suspension system of the vehicle (as discussed in more detail in GB1511974.6), and an outlet 60c, which is connected to the control inlet 42c of the emergency apply valve 42. The override shuttle valve 60 has a valve member which is movable between a first position in which flow of fluid from the suspension-side inlet 60b to the outlet 60c is substantially prevented whilst flow of fluid from the brake-side inlet 60a to the outlet 60c is permitted, and a second position in which flow of fluid from the suspension-side inlet 60b to the outlet 60c is permitted, but flow of fluid from the brake-side inlet 60a to the outlet 60c is substantially prevented. The override shuttle valve 60 is also configured such that it adopts the second position if the fluid pressure at the suspension side inlet 60b exceeds the fluid pressure at the brake-side inlet 60a by an amount which greater than a predetermined level, and adopts the first position if the fluid pressure at the suspension side inlet 60b does not exceed the fluid pressure at the brake-side inlet 60a by an amount which is greater than the predetermined level. Although not essential, in this example, the override shuttle valve is provided with a resilient biasing element or spring which biases the valve member to the first position. As such, the valve member will not move from the first position to the second position until the fluid pressure at the suspension-side inlet 60b exceeds the fluid pressure at the brake-side inlet 60a by an amount which is sufficient to overcome the force of the spring.

In this embodiment of the invention, if it is desired to override the emergency application of the brakes, the alternative source of pressurised fluid is activated to supply pressurised fluid to the suspension-side inlet 60b of the over-ride shuttle valve 60. The resulting fluid pressure at the suspension-side inlet 60b pushes the valve member to the second position, and connects the trailer reservoir 28' to the control port 42c of the emergency apply valve 42, thus maintaining the emergency apply valve 42 in its first position. The spring brake chamber 23a' is thus supplied with pressurised fluid from the trailer reservoir 28' to hold the spring brakes off.

Although in the embodiments of the invention described above, the park valve 22' is provided with a pilot operated actuator to facilitate the "auto-parking" function, this need not be the case, and the invention may be applied to any braking system arranged to present reservoir pressure to the spring brake line 21'when the supply line 12' is pressurised.

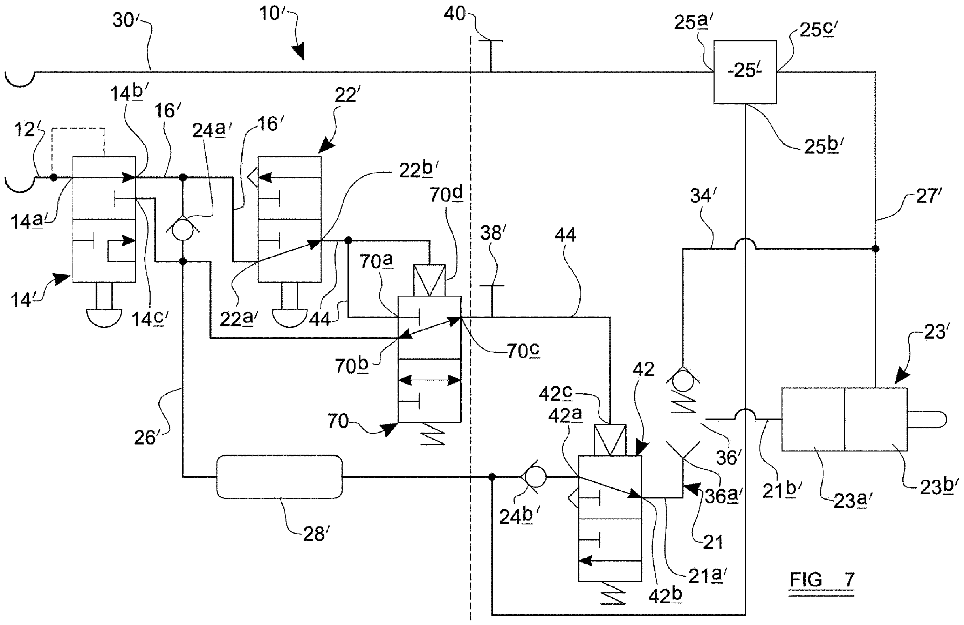

An example of such an alternative embodiment of the invention is illustrated in Figure 7. In this embodiment, the pilot operated actuator 20' and pilot control line 18' are omitted, so that the park valve 22' is movable only manually between its first and second positions. Moreover, the inlet 22a' of the park valve 22 is connected to the outlet 14b' of the shunt valve 14' valve the supply line 16', the first non-return valve 24a' being positioned in the trailer reservoir supply line 26' between the supply line 16' and the trailer reservoir 28'. This means that the emergency braking control line 44 vents to atmosphere at the supply line 16' when the supply line 16' is disconnected from its source of pressurised fluid, whilst the first non-return valve 24a' prevents the loss of fluid pressure from the reservoir 28' via the supply line 16'.

A pilot operated auxiliary valve 70 is provided to facilitate the automatic application of the spring brake by release of pressure from the spring brake chamber 23a' in the event of loss of pressure in the supply line. The auxiliary valve 70 has a first inlet which is connected to the outlet 22b' of the park valve 22' via the emergency braking control line 44, a second inlet 70b which is connected to the trailer reservoir supply line 26', and an outlet which is connected to the control port 42c of the emergency brake apply valve 42', and a control port 70d which is connected to the emergency braking control line 44 between the first inlet 70a and the outlet 22b' of the park valve 22. The auxiliary valve 70 is movable between a first position in which the second inlet 70b is connected to the outlet 70c whilst the first inlet 70a is closed, and a second position in which the first inlet 70a is connected to the outlet 70c whilst the second inlet 70b is closed. The auxiliary valve 70 also includes a resilient biasing element which urges the auxiliary valve 70 into its second position, and a fluid pressure operated actuator which pushes the auxiliary valve 70 against the force of the resilient biasing element into the first position on the supply of pressurised fluid to the control inlet 70d.

In this embodiment of braking system, the system adopts the configuration shown in Figure 7 when the supply line is pressurised, and the park valve 22' is in its first position. In this case, pressurised fluid passes along the supply line - from the connector 12', along the supply line 16' and to the emergency braking control line 44 via the park valve 22'. The control inlet 70d of the auxiliary valve 70 is therefore pressurised so that the auxiliary valve 70 adopts its first position and the control inlet 42c of the emergency braking apply valve 42 is supplied with fluid pressure from the reservoir 28' via the trailer reservoir supply line 26'. The emergency braking control valve 42 therefore moves to its first position, and pressurised fluid is supplied to the spring brake chamber 23a' of the brake actuator 23' as described above.

If the supply line 16' is disconnected, and therefore vents to atmosphere, the control inlet 70d of the auxiliary valve 70 is no longer pressurised so the auxiliary valve 70 moves to its second position in which it connects the control inlet 42c of the emergency braking apply valve 42 to the supply line 16' via the park valve 22' and shunt valve 14'. The resulting venting of the control inlet 42c of the emergency braking apply valve 42 causes this valve to move to its second position, whereupon it connects the spring brake chamber 23a' to atmosphere, thus applying the spring brake. The same happens when the emergency braking control line 44' is vented at the park valve 22' by the manual movement of the park valve 22' to its second position.

The pressure transducer 38' is located in the emergency braking control line 44 between the outlet 70c of the auxiliary valve 70 and the control inlet 42c of the emergency braking apply valve 42, and is therefore connected to the reservoir 28' when the auxiliary valve 70 is in its first position. In other words, when the supply line is pressurised, the pressure transducer 38' measures the pressure of the fluid in the reservoir 28'.

When used in this specification and claims, the terms "comprises" and "comprising" and variations thereof mean that the specified features, steps or integers are included. The terms are not to be interpreted to exclude the presence of other features, steps or components.

## Claims

1. A vehicle braking system comprising a supply line (16') which is adapted to be connected to a supply of pressurised fluid, a pressurised fluid reservoir (28'), a parking brake actuator assembly including a brake actuator (23') having a spring brake chamber (32a') which is operable such that the supply of pressurised fluid to the spring brake chamber (32a') causes the brake actuator (23') to move to a brake release position and the release of pressurised fluid from the spring brake chamber (32a') causes the brake actuator (23') to move a brake apply position, a pilot operated emergency brake apply valve (42) with an inlet (42a) which is connected to the pressurised fluid reservoir (28'), an outlet (42b) which is connected to the spring brake chamber (32a') by a spring brake line (21'), and a control inlet (42c) connected to an emergency braking control line (44), the emergency brake apply valve (42) being movable in accordance with the pressure at its control inlet (42c) between a first position in which its inlet (42a) is connected to its outlet (42b) and a second position in which its inlet (42a) is closed and its outlet (42b) vents to a low pressure region, there being a pressure sensor provided in the emergency braking control line (44), **characterised in that** when the supply line (16') is pressurised, the pressure sensor is directly connected to the pressurised fluid reservoir (28').

2. A vehicle braking system according to claim 1 wherein the pressure sensor is not connected to the pressurised fluid reservoir (28') when the supply line (16') is depressurised.

3. A vehicle braking system according to claim 1 or 2 wherein the vehicle braking system further includes a park valve assembly which is movable between a first configuration in which the emergency braking control line (44) is connected to the pressurised fluid reservoir (28') and a second configuration in which the emergency braking control line (44) is vented to a low pressure region.

4. A vehicle braking system according to claim 3 wherein the park valve assembly adopts the first configuration in which the emergency braking control line (44) is connected to the pressurised fluid reservoir (28') when the supply line (16') is pressurised, and automatically moves to the second configuration in which the emergency braking control line (44) is vented to a low pressure region when the supply line (16') is depressurised.

5. A vehicle braking system according to claim 3 or 4 wherein the park valve assembly includes a park valve (22') which has an inlet (22a') and an outlet (22b'), the inlet (22a') being connected to the supply line (16'), and the outlet (22b') being connected to the emergency braking control line (44), the park valve (22') being movable between a first position in which the inlet (22a') is connected to the outlet (22b'), and a second position in which the inlet (22a') is closed and the outlet (22b') vents to a low pressure region.

6. A vehicle braking system according to claim 5 wherein the park valve (22') is pilot operated and includes an actuator (20') with a control inlet (42c) which is connected to the supply line (16') via a pilot control line (18'), the park valve (22') being movable between its first position and second position according to the fluid pressure at the control inlet (42c).

7. A vehicle braking system according to any preceding claim wherein the braking system further includes a non-return valve (24a') in the supply line (16') which is operable to permit flow of fluid along the supply line (16') towards the inlet (22a') of the park valve (22') whilst substantially preventing flow of fluid along the park line (16') in the opposite direction.

8. A vehicle braking system according to claim 5, 6 or 7 wherein the park valve assembly is provided with a pilot operated auxiliary valve (70) having a first inlet (70a) which is connected to the outlet (22b') of the park valve (22'), a second inlet (70b) which is connected to the pressurised fluid reservoir (28'), an outlet (70c) which is connected to the emergency braking control line (44), and a control inlet (70d) which is connected to the outlet (22b') of the park valve (22'), the auxiliary valve (70) being movable in accordance with the fluid pressure at its control inlet (70d) between a first position in which the second inlet (70b) is connected its outlet (70c) and a second position in which the first inlet (70a) is connected to its outlet (70c).

9. A vehicle braking system according to any preceding claim wherein the braking system further includes a non-return valve (24a') mounted in a line between the supply line (16') and the pressurised fluid reservoir (28'), the non-return valve (24a') being operable to permit flow of fluid from the supply line (16') to the pressurised fluid reservoir (28') whilst substantially preventing flow of fluid in the opposite direction.

10. A vehicle braking system according to claims 8 and 9 wherein the second inlet (70b) of the auxiliary valve (70) is connected to the line between the supply line (16') and the pressurised fluid reservoir (28'), and the non-return valve (24a') is located between the supply line (16') and the connection to the second inlet (70b) of the auxiliary valve (70).

11. A vehicle braking system according to any preceding claim wherein the emergency brake apply valve (42) further includes a biasing element which urges the emergency brake apply valve (42) into its second position, and an actuator which is connected to the control inlet (42c) of the emergency brake apply valve (42) and which operates such that supply of pressurised fluid to the control inlet (42c) of the emergency brake apply valve (42) causes the emergency brake apply valve (42) to move against the force of the biasing element to its first position, the biasing element acting to return the emergency brake apply valve (42) to its second position on release of pressurised fluid from its control inlet (42c).

12. A vehicle braking system according to any preceding claim wherein the pressurised fluid reservoir (28') is connected to the supply line (16').

13. A vehicle braking system according to any preceding claim wherein a non-return valve (24b') is provided in the line between the inlet (42a) of the emergency brake apply valve (42) and the pressurised fluid reservoir (28), the said non-return valve (24b') being arranged such that flow of fluid from the pressurised fluid reservoir (28') to the inlet (42a) of the emergency brake apply valve (42) is permitted whilst flow of fluid in the opposition direction, from the inlet (42a) of the emergency brake apply valve (42) to the reservoir (28') is substantially prevented.

14. A vehicle braking system according to any preceding claim further including a manually operable shunt valve (14') which is movable between a first position in which the supply line (16') is connected to a connector (12') suitable for connection to an external source of pressurised fluid, and a second position in which the supply line (16') is connected to a further pressurised fluid reservoir, and the pressure sensor is directly connected to the pressurised fluid reservoir when supply line (16') is pressurised and the shunt valve (14') is in either its first position or its second position.

15. A trailer comprising a braking system according to any preceding claim.

## Patentansprüche

1. Bremssystem für ein Fahrzeug, umfassend eine Versorgungsleitung (16'), die für die Verbindung mit einer Druckfluidversorgung ausgelegt ist, einen Druckfluidbehälter (28'), eine Feststellbremsenaktor-Anordnung einschließlich eines Bremsenaktors (23') mit einer Federspeicherbremskammer (32a'), die so betätigbar ist, dass die Druckfluidversorgung der Federspeicherbremskammer (32a') bewirkt, dass sich der Bremsenaktor (23') in eine Bremsenfreigabestellung bewegt, und die Freigabe von Druckfluid aus der Federspeicherbremskammer (32a') bewirkt, dass sich der Bremsenaktor (23') in eine Bremsenbetätigungsposition bewegt, ein pilotgesteuertes Notbremsbetätigungsventil (42) mit einem Einlass (42a), der mit dem Druckfluidbehälter (28') verbunden ist, einem Auslass (42b), der mit der Federspeicherbremskammer (32a') durch eine Federspeicherbremsleitung (21') verbunden ist, und einem Steuereinlass (42c), der mit einer Notbremssteuerleitung (44) verbunden ist, wobei das Notbremsbetätigungsventil (42) gemäß dem Druck an seinem Steuereinlass (42c) zwischen einer ersten Position, in der sein Einlass (42a) mit seinem Auslass (42b) verbunden ist, und einer zweiten Position, in der sein Einlass (42a) geschlossen ist und sein Auslass (42b) in einen Niederdruckbereich abgelassen wird, bewegbar ist, wobei ein Drucksensor in der Notbremssteuerleitung (44) bereitgestellt ist, **dadurch gekennzeichnet, dass**, wenn die Versorgungsleitung (16') druckbeaufschlagt ist, der Drucksensor direkt mit dem Druckfluidbehälter (28') verbunden ist.

2. Bremssystem für ein Fahrzeug nach Anspruch 1, worin der Drucksensor nicht mit dem Druckfluidbehälter (28') verbunden ist, wenn die Versorgungsleitung (16') drucklos ist.

3. Bremssystem für ein Fahrzeug nach Anspruch 1 oder 2, worin das Bremssystem für ein Fahrzeug ferner eine Feststellventilanordnung beinhaltet, die zwischen einer ersten Konfiguration, in der die Notbremssteuerleitung (44) mit dem Druckfluidbehälter (28') verbunden ist, und einer zweiten Konfiguration, in der die Notbremssteuerleitung (44) in einen Niederdruckbereich abgelassen wird, bewegbar ist.

4. Bremssystem für ein Fahrzeug nach Anspruch 3, worin die Feststellventilanordnung die erste Konfiguration übernimmt, in der die Notbremssteuerleitung (44) mit dem Druckfluidbehälter (28') verbunden ist, wenn die Versorgungsleitung (16') druckbeaufschlagt ist, und automatisch zur zweiten Konfiguration übergeht, in der die Notbremssteuerleitung (44) in einen Niederdruckbereich abgelassen wird, wenn die Versorgungsleitung (16') drucklos ist.

5. Bremssystem für ein Fahrzeug nach Anspruch 3 oder 4, worin die Feststellventilanordnung ein Feststellventil (22') beinhaltet, das einen Einlass (22a') und einen Auslass (22b') aufweist, wobei der Einlass (22a') mit der Versorgungsleitung (16') verbunden ist und der Auslass (22b') mit der Notbremssteuerleitung (44) verbunden ist, wobei das Feststellventil (22') zwischen einer ersten Position, in der der Einlass (22a') mit dem Auslass (22b') verbunden ist, und einer zweiten Position, in der der Einlass (22a') geschlossen ist und der Auslass (22b') in einen Niederdruckbereich abgelassen wird, bewegbar ist.

6. Bremssystem für ein Fahrzeug nach Anspruch 5, worin das Feststellventil (22') pilotgesteuert ist und einen Aktor (20') mit einem Steuereinlass (42c), der mit der Versorgungsleitung (16') über eine Pilotsteuerleitung (18') verbunden ist, beinhaltet, wobei das Feststellventil (22') zwischen seiner ersten Position und zweiten Position gemäß dem Fluiddruck am Steuereinlass (42c) bewegbar ist.

7. Bremssystem für ein Fahrzeug nach einem vorhergehenden Anspruch, worin das Bremssystem ferner ein Rückschlagventil (24a') in der Versorgungsleitung (16') beinhaltet, das betätigbar ist, um einen Fluidfluss entlang der Versorgungsleitung (16') hin zum Einlass (22a') des Feststellventils (22') zu gestatten, während ein Fluidfluss entlang der Feststellleitung (16') in der Gegenrichtung im Wesentlichen verhindert wird.

8. Bremssystem für ein Fahrzeug nach Anspruch 5, 6 oder 7, worin die Feststellventilanordnung mit einem pilotgesteuerten Hilfsventil (70) versehen ist, das einen ersten Einlass (70a), der mit dem Auslass (22b') des Feststellventils (22') verbunden ist, einen zweiten Einlass (70b), der mit dem Druckfluidbehälter (28') verbunden ist, einen Auslass (70c), der mit der Notbremssteuerleitung (44) verbunden ist, und einen Steuereinlass (70d), der mit dem Auslass (22b') des Feststellventils (22') verbunden ist, aufweist, wobei das Hilfsventil (70) gemäß dem Fluiddruck an seinem Steuereinlass (70d) zwischen einer ersten Position, in der der zweite Einlass (70b) mit seinem Auslass (70c) verbunden ist, und einer zweiten Position, in der der erste Einlass (70a) mit seinem Auslass (70c) verbunden ist, bewegbar ist.

9. Bremssystem für ein Fahrzeug nach einem vorhergehenden Anspruch, worin das Bremssystem ferner ein Rückschlagventil (24a') beinhaltet, das in einer Leitung zwischen der Versorgungsleitung (16') und dem Druckfluidbehälter (28') montiert ist, wobei das Rückschlagventil (24a') betätigbar ist, um einen Fluidfluss von der Versorgungsleitung (16') zum druckbeaufschlagten Fluidreservoir (28') zu gestatten, während ein Fluidfluss in der Gegenrichtung im Wesentlichen verhindert wird.

10. Bremssystem für ein Fahrzeug nach Anspruch 8 und 9, worin der zweite Einlass (70b) des Hilfsventils (70) mit der Leitung zwischen der Versorgungsleitung (16') und dem Druckfluidbehälter (28') verbunden ist und sich das Rückschlagventil (24a') zwischen der Versorgungsleitung (16') und der Verbindung mit dem zweiten Einlass (70b) des Hilfsventils (70) befindet.

11. Bremssystem für ein Fahrzeug nach einem vorhergehenden Anspruch, worin das Notbremsbetätigungsventil (42) ferner ein Vorspannelement beinhaltet, das das Notbremsbetätigungsventil (42) in seine zweite Position drückt, und einen Aktor, der mit dem Steuereinlass (42c) des Notbremsbetätigungsventils (42) verbunden ist und der so arbeitet, dass Druckfluidversorgung zum Steuereinlass (42c) des Notbremsbetätigungsventils (42) bewirkt, dass sich das Notbremsbetätigungsventil (42) gegen die Kraft des Vorspannelements in seine erste Position bewegt, wobei das Vorspannelement wirkt, um das Notbremsbetätigungsventil (42) in seine zweite Position bei Freigabe von Druckfluid aus seinem Steuereinlass (42c) zurückzuführen.

12. Bremssystem für ein Fahrzeug nach einem vorhergehenden Anspruch, worin der Druckfluidbehälter (28') mit der Versorgungsleitung (16') verbunden ist.

13. Bremssystem für ein Fahrzeug nach einem vorhergehenden Anspruch, worin ein Rückschlagventil (24b') in der Leitung zwischen dem Einlass (42a) des Notbremsbetätigungsventils (42) und dem Druckfluidbehälter (28) bereitgestellt ist, wobei das besagte Rückschlagventil (24b') so angeordnet ist, dass Fluidfluss vom Druckfluidbehälter (28') zum Einlass (42a) des Notbremsbetätigungsventils (42) gestattet ist, während Fluidfluss in der Gegenrichtung, vom Einlass (42a) des Notbremsbetätigungsventils (42) zum Behälter (28'), im Wesentlichen verhindert wird.

14. Bremssystem für ein Fahrzeug nach einem vorhergehenden Anspruch, das ferner ein manuell betätigbares Shuntventil (14') beinhaltet, das bewegbar ist zwischen einer ersten Position, in der die Versorgungsleitung (16') mit einem für die Verbindung mit einer externen Druckfluidquelle geeigneten Verbinder (12') verbunden ist, und einer zweiten Position, in der die Versorgungsleitung (16') mit einem weiteren Druckfluidbehälter verbunden ist, und der Drucksensor direkt mit dem Druckfluidbehälter verbunden ist, wenn Versorgungsleitung (16') druckbeaufschlagt ist und das Shuntventil (14') entweder in seiner ersten Position oder seiner zweiten Position ist.

15. Anhänger, der ein Bremssystem nach einem vorhergehenden Anspruch umfasst.

## Revendications

1. Un système de freinage de véhicule comprenant une conduite d'alimentation (16') qui est adaptée pour être raccordée à une alimentation en fluide sous pression, un réservoir de fluide sous pression (28'), un ensemble actionneur de frein de stationnement incluant un actionneur de frein (23') ayant une chambre de frein à ressort (32a') qui peut être actionnée de telle sorte que l'alimentation en fluide sous pression à la chambre de frein à ressort (32a') amène l'actionneur de frein (23') à se déplacer à une position de relâchement de frein et la libération de fluide sous pression de la chambre de frein à ressort (32a') amène l'actionneur de frein (23') à déplacer une position d'application de frein, une soupape d'application de frein d'urgence actionnée par pilote (42) avec une admission (42a) qui est raccordée au réservoir de fluide sous pression (28'), une sortie (42b) qui est raccordée à la chambre de frein à ressort (32a') par une conduite de frein à ressort (21') et une admission de commande (42c) raccordée à une conduite de commande de freinage d'urgence (44), la soupape d'application de frein d'urgence (42) pouvant être déplacée en fonction de la pression à son admission de commande (42c) entre une première position dans laquelle son admission (42a) est raccordée à sa sortie (42b) et une deuxième position dans laquelle son admission (42a) est fermée et sa sortie (42b) est mise à l'air libre vers une région à basse pression, où est fourni un capteur de pression dans la conduite de commande de freinage d'urgence (44), **caractérisé en ce que**, lorsque la conduite d'alimentation (16') est sous pression, le capteur de pression est raccordé directement au réservoir de fluide sous pression (28').

2. Un système de freinage de véhicule selon la revendication 1 dans lequel le capteur de pression n'est pas raccordé au réservoir de fluide sous pression (28') lorsque la conduite d'alimentation (16') est dépressurisée.

3. Un système de freinage de véhicule selon la revendication 1 ou 2 dans lequel le système de freinage de véhicule inclut en outre un ensemble soupape de stationnement qui peut être déplacé entre une première configuration dans laquelle la conduite de commande de freinage d'urgence (44) est raccordée au réservoir de fluide sous pression (28') et une deuxième configuration dans laquelle la conduite de commande de freinage d'urgence (44) est mise à l'air libre vers une région à basse pression.

4. Un système de freinage de véhicule selon la revendication 3 dans lequel l'ensemble soupape de stationnement adopte la première configuration dans laquelle la conduite de commande de freinage d'urgence (44) est raccordée au réservoir de fluide sous pression (28') lorsque la conduite d'alimentation (16') est sous pression, et se déplace automatiquement vers la deuxième configuration dans laquelle la conduite de commande de freinage d'urgence (44) est mise à l'air libre vers une région à basse pression lorsque la conduite d'alimentation (16') est dépressurisée.

5. Un système de freinage de véhicule selon la revendication 3 ou 4 dans lequel l'ensemble soupape de stationnement inclut une soupape de stationnement (22') qui a une admission (22a') et une sortie (22b'), l'admission (22a') étant raccordée à la conduite d'alimentation (16') et la sortie (22b') étant raccordée à la conduite de commande de freinage d'urgence (44), la soupape de stationnement (22') pouvant être déplacée entre une première position dans laquelle l'admission (22a') est raccordée à la sortie (22b') et une deuxième position dans laquelle l'admission (22a') est fermée et la sortie (22b') est mise à l'air libre vers une région à basse pression.

6. Un système de freinage de véhicule selon la revendication 5 dans lequel la soupape de stationnement (22') est actionnée par pilote et inclut un actionneur (20') avec une admission de commande (42c) qui est raccordée à la conduite d'alimentation (16') via une conduite de commande pilote (18'), la soupape de stationnement (22') pouvant être déplacée entre sa première position et sa deuxième position en fonction de la pression du fluide à l'admission de commande (42c).

7. Un système de freinage de véhicule selon l'une quelconque des revendications précédentes dans lequel le système de freinage inclut en outre un clapet anti-retour (24a') dans la conduite d'alimentation (16') qui peut être actionnée pour permettre l'écoulement de fluide le long de la conduite d'alimentation (16') vers l'admission (22a') de la soupape de stationnement (22') tout en empêchant sensiblement l'écoulement de fluide le long de la conduite de stationnement (16') dans le sens inverse.

8. Un système de freinage de véhicule selon la revendication 5, 6 ou 7 dans lequel l'ensemble soupape de stationnement est muni d'une soupape auxiliaire actionnée par pilote (70) ayant une première admission (70a) qui est raccordée à la sortie (22b') de la soupape de stationnement (22'), une deuxième admission (70b) qui est raccordée au réservoir de fluide sous pression (28'), une sortie (70c) qui est raccordée à la conduite de commande de freinage d'urgence (44) et une admission de commande (70d) qui est raccordée à la sortie (22b') de la soupape de stationnement (22'), la soupape auxiliaire (70) pouvant être déplacée en fonction de la pression du fluide à son admission de commande (70d) entre une première position dans laquelle la deuxième admission (70b) est raccordée à sa sortie (70c) et une deuxième position dans laquelle la première admission (70a) est raccordée à sa sortie (70c).

9. Un système de freinage de véhicule selon l'une quelconque des revendications précédentes dans lequel le système de freinage inclut en outre un clapet anti-retour (24a') monté dans une conduite entre la conduite d'alimentation (16') et le réservoir de fluide sous pression (28'), le clapet anti-retour (24a') pouvant être actionné pour permettre l'écoulement de fluide de la conduite d'alimentation (16') vers le réservoir de fluide sous pression (28') tout en empêchant sensiblement l'écoulement de fluide dans le sens inverse.

10. Un système de freinage de véhicule selon les revendications 8 et 9 dans lequel la deuxième admission (70b) de la soupape auxiliaire (70) est raccordée à la conduite entre la conduite d'alimentation (16') et le réservoir de fluide sous pression (28'), et le clapet anti-retour (24a') est situé entre la conduite d'alimentation (16') et le raccordement à la deuxième admission (70b) de la soupape auxiliaire (70).

11. Un système de freinage de véhicule selon l'une quelconque des revendications précédentes dans lequel la soupape d'application de frein d'urgence (42) inclut en outre un élément de sollicitation qui pousse la soupape d'application de frein d'urgence (42) à sa deuxième position, et un actionneur qui est raccordé à l'admission de commande (42c) de la soupape d'application de frein d'urgence (42) et qui fonctionne de telle sorte que l'alimentation en fluide sous pression à l'admission de commande (42c) de la soupape d'application de frein d'urgence (42) amène la soupape d'application de frein d'urgence (42) à se déplacer contre la force de l'élément de sollicitation à sa première position, l'élément de sollicitation agissant pour remettre la soupape d'application de frein d'urgence (42) à sa deuxième position lors de la libération du fluide sous pression provenant de son admission de commande (42c).

12. Un système de freinage de véhicule selon l'une quelconque des revendications précédentes dans lequel le réservoir de fluide sous pression (28') est raccordé à la conduite d'alimentation (16').

13. Un système de freinage de véhicule selon l'une quelconque des revendications précédentes dans lequel un clapet anti-retour (24b') est fourni dans la conduite entre l'admission (42a) de la soupape d'application de frein d'urgence (42) et le réservoir de fluide sous pression (28), ledit clapet anti-retour (24b') étant agencé de telle sorte que l'écoulement de fluide du réservoir de fluide sous pression (28') vers l'admission (42a) de la soupape d'application de frein d'urgence (42) est permis alors que l'écoulement de fluide dans le sens inverse, de l'admission (42a) de la soupape d'application de frein d'urgence (42) au réservoir (28') est sensiblement empêché.

14. Un système de freinage de véhicule selon l'une quelconque des revendications précédentes incluant en outre une soupape de dérivation actionnable manuellement (14') qui peut être déplacée entre une première position dans laquelle la conduite d'alimentation (16') est raccordée à un raccord (12') convenant au raccordement à une source externe de fluide sous pression, et une deuxième position dans laquelle la conduite d'alimentation (16') est raccordée à un autre réservoir de fluide sous pression, et le capteur de pression est directement raccordé au réservoir de fluide sous pression lorsque la conduite d'alimentation (16') est sous pression et que la soupape de dérivation (14') est dans, soit sa première position, soit sa deuxième position.

15. Une remorque comprenant un système de freinage selon l'une quelconque des revendications précédentes.
